# EUROPÄISCHE PATENTANMELDUNG

(11) **EP 1 505 789 A1**
(43) Veröffentlichungstag der Anmeldung: **09.02.2005**
(21) Anmeldenummer: 03017798.4
(22) Anmeldetag: 04.08.2003
(51) Int. Cl.: H04L 29/06

(54) **Verfahren und Anordnung zur Steuerung einer Kommunikations-Verbindung in einem paketvermittelten Kommunikationsnetzwerk**

(71) Anmelder: SIEMENS AKTIENGESELLSCHAFT, 80333 München (DE)
(72) Erfinder: Bozoniek, Bruno, 33178 Borchen (DE); Brüggemeier, Wolfgang, 33129 Delbrück (DE); Langer, Uwe, 33098 Paderborn (DE); Zimmermann, Rainer, 33106 Paderborn (DE)

(57) **Zusammenfassung**

Zur Steuerung einer Kommunikationsverbindung zwischen einem ersten und einem zweiten Kommunikationsendgerät (EG3 und EG4) in einem paketvermittelnden Kommunikationsnetzwerk ist zumindest das erste Kommunikationsendgerät (EG3) an einem Kommunikationsknoten (KK2) angemeldet. Zur Steuerung der Kommunikationsverbindung werden Steuerdaten zwischen dem ersten und dem zweiten Kommunikationsendgerät (EG3 und EG4) unter Zwischenschaltung des Kommunikationsknotens (KK2) ausgetauscht, wobei Nutzdaten direkt zwischen dem ersten und dem zweiten Kommunikationsendgerät (EG3 und EG4) unter Verwendung eines Nutzdatenprotokolls ausgetauscht werden. Das erste Kommunikationsendgerät (EG3) verwendet zum Austausch der Steuerdaten ein erstes Kommunikationsprotokoll und das zweite Kommunikationsendgerät (EG4) verwendet zum Austausch der Steuerdaten ein zweites Kommunikationsprotokoll. Dabei werden in dem Kommunikationsknoten (KK2) die Steuerdaten von dem ersten in das zweite Kommunikationsprotokoll umgesetzt, und umgekehrt.

## Beschreibung

Verfahren und Anordnung zur Steuerung einer Kommunikationsverbindung in einem paketvermittelten Kommunikationsnetzwerk

Die Erfindung betrifft ein Verfahren zur Steuerung einer Kommunikationsverbindung gemäß des Oberbegriffs des Patentanspruchs 1 und eine Kommunikationsanordnung zur Durchführung des Verfahrens.

Für die Verbindung zwischen den Komponenten von Kommunikationsnetzwerken werden insbesondere im Bereich der privaten Kommunikationsnetzwerke verstärkt Datennetze verwendet. In diesen Sprachdatennetzen werden die Komponenten in der gleichen Weise wie Computer, Server und andere aus der Datentechnik bekannte Netzwerkkomponenten angeschlossen und betrieben. Im Gegensatz zu den herkömmlichen leitungsvermittelten Kommunikationsnetzwerken, in denen die Komponenten (Telefone, Vermittlungssysteme, Telefaxgeräte o. ä.) zumeist über physikalische Punkt-zu-Punkt-Verbindungen Informationen (Steuerinformationen, Nutzdaten) miteinander austauschen, sind die Verbindungen (Kanäle) in den Datennetzen logischer Natur, weil prinzipiell jede Komponente eines Kommunikationsnetzwerkes (zumindest innerhalb eines Netzsegmentes) mit jeder anderen dort angeordneten Netzwerkkomponente die Informationen austauschen kann.

Die Kommunikationsnetzwerke, die sich eines Datennetzes bedienen, in denen Informationen in Form von Datenpaketen gemäß des Internet-Protokolls ausgetauscht werden, werden auch als VoIP-Kommunikationsnetzwerke (VoIP = Voice over Internet Protocol) bezeichnet. Während in dem Internet-Protokoll (TCP-IP, UDP-IP, etc.) die Konventionen für den Aufbau und den Transport der Datenpakete definiert sind, werden für die mit diesen Kommunikationsnetzwerken transportierten Informationen weitere Protokolle verwendet, die den Aufbau, den Betrieb und den Abbau von Kommunikationsverbindungen beschreiben, und die darüber hinaus die Grundlage für weitere Dienste und Funktionen eines Kommunikationsnetzwerkes sind. Dazu gehört beispielsweise die Steuerung eines Displays an einem Kommunikationsendgerät ("IP-Telefon", "IP-Client"), die Übertragung von Tastatureingaben und Befehlen von einem Kommunikationsendgerät zu einem Kommunikationsknoten (und zurück), etc..

Für Kommunikationsverbindungen, die über ein eigenes, geschlossenes, privates Kommunikationsnetzwerk hinaus mit einem Teilnehmer aus einem anderen - möglicherweise von einem anderen Hersteller aufgebauten - Kommunikationsnetzwerk reichen sollen, ist die Verwendung von genormten, allgemein verwendeten Kommunikationsprotokollen unerlässlich. Dem gegenüber können innerhalb eines in sich geschlossenen Kommunikationsnetzwerkes alternativ oder zusätzlich eigene (proprietäre) Kommunikationsprotokolle eingesetzt werden, vorzugsweise dann, wenn sich eine innerhalb des geschlossenen Kommunikationsnetzwerkes gewünschte Funktionalität mit den allgemein verwendeten und genormten Kommunikationsprotokollen nur schwer oder gar nicht realisieren lässt.

Um einen Kompromiss zu finden zwischen einerseits der Kompatibilität des eigenen Kommunikationsnetzwerks mit Kommunikationsnetzwerken und den darin betriebenen Kommunikationsendgeräten anderer Betreiber bzw. Hersteller und andererseits dem Wunsch, in dem eigenen Kommunikationsnetzwerk möglichst viele und leistungsfähige Funktionen zur Verfügung zu stellen, wird häufig der zuletzt beschriebene Weg gewählt, indem in einem Kommunikationsnetzwerk parallel zueinander eines oder mehrere allgemein anerkannte (genormte) Kommunikationsprotokolle zusammen mit einem oder mehreren proprietären Kommunikationsprotokollen verwendet werden.

Beispielsweise werden die Nutzdaten (Sprachdaten) in VoIP-Kommunikationsanordnungen meist gemäß dem RTP/RTCP-Protokoll (Real Time Protocol / Real Time Control Protocol) übertragen.

Bei dem RTP/RTCP-Protokoll handelt es sich um ein allgemein anerkanntes genormtes Kommunikationsprotokoll, bei dem die Nutzdaten (Sprachdaten) zwischen den Kommunikationsendgeräten ausgetauscht werden, die an der Kommunikationsverbindung direkt, d. h. ohne Zwischenschaltung einer zentralen Instanz, beteiligt sind. Da die von dem RTP/RTCP-Protokoll vorgesehenen Funktionen zumeist als ausreichend für den Transport der Nutzdaten sind, wird dieses Kommunikationsprotokoll nicht nur für Nutzdatenverbindungen zwischen Kommunikationsendgeräten und Kommunikationsknoten verschiedener Hersteller verwendet, sondern auch innerhalb geschlossener Kommunikationsnetzwerke eines einzelnen Herstellers. Gesteuert werden die RTP/RTCP-Nutzdatenverbindungen regelmäßig unter Verwendung genormter Kommunikationsprotokolle, wie z.B. das ITU-T-H.323-Protokoll oder das ITU-T-H.450-Protokoll (kurz: H.323 und H.450).

Mit den letztgenannten Kommunikationsprotokollen sind jedoch viele Leistungsmerkmale und Funktionen, die aus der leitungsvermittelten Telephonie und deren Kommunikationsnetzwerken bekannt sind, nur schlecht oder gar nicht realisierbar. Beispielsweise werden bei Kommunikationsendgeräten, die aus der leitungsvermittelten Telephonie bekannt sind, Tastatureingaben direkt von dem Kommunikationsendgerät zu dem zugeordneten Kommunikationsknoten übertragen, und im Gegenzug wird eine Displaymeldung oder das Ein- und Ausschalten von Leuchtdioden etc. direkt mittels Übertragung einfacher Befehle von dem Kommunikationsknoten zu dem Kommunikationsendgerät hin gesteuert. Diese Funktionen werden in den VoIP-Kommunikationsnetzwerken meist durch ein proprietäres Kommunikationsprotokoll abgebildet, welches zusätzlich zu den genormten Kommunikationsprotokollen innerhalb dieses Kommunikationsnetzwerkes verwendet wird.

Bei den bekannten Kommunikationsnetzwerken hat sich als nachteilig erwiesen, dass in den Kommunikationsendgeräten eine Vielzahl von Schnittstellenstrukturen ("Protocol-Stacks") realisiert sein müssen. Insbesondere die Schnittstellenstrukturen zum Betrieb des H.323/H.450-Protokolls belegen in den mikroprozessorgesteuerten Endgeräten eine große Menge Speicherplatz und verbrauchen dadurch viele Ressourcen. Darüber hinaus müssen oftmals bei der Verwendung genormter Kommunikationsprotokolle für jedes Kommunikationsendgerät, in dem eine entsprechende Schnittstellenstruktur realisiert ist, Lizenzgebühren entrichtet werden. Außerdem steigt in den Kommunikationsendgeräten die Komplexität der Gerätesoftware ("firmware") mit jeder zusätzlich zu implementierenden Schnittstellenstruktur.

Es ist daher eine Aufgabe der vorliegenden Erfindung, die Komplexität der Schnittstellenstrukturen von Kommunikationsendgeräten zu vereinfachen und so die Entwicklung, die Herstellung und den Betrieb von Kommunikationsendgeräten in paketvermittelten Kommunikationsnetzwerken kostengünstiger und einfacher zu gestalten.

Die Aufgabe wird für das Verfahren durch die Merkmale des Patentanspruchs 1 und für die Kommunikationsanordnung durch die Merkmale des Patentanspruchs 7 gelöst.

Die Lösung sieht für das Verfahren vor, dass das erste Kommunikationsendgerät zum Austausch der Steuerdaten ein erstes Kommunikationsprotokoll und das zweite Kommunikationsendgerät zum Austausch der Steuerdaten ein zweites Kommunikationsprotokoll verwendet, und dass in dem Kommunikationsknoten die Steuerdaten von dem ersten in das zweite Kommunikationsprotokoll umgesetzt werden, und umgekehrt.

Dadurch entfällt in dem ersten Kommunikationsendgerät die Verwendung des zweiten Kommunikationsprotokolls, wodurch eine dem zweiten Kommunikationsprotokoll entsprechende Schnittstellenstruktur (Protokoll-Stack) in dem ersten Kommunikationsendgerät eingespart wird.

Die Lösung sieht für die Kommunikationsanordnung vor, dass das Endgerät eine Schnittstellenstruktur zum Austausch von Steuerdaten gemäß eines proprietären Kommunikationsprotokolls mit dem Kommunikationsknoten aufweist, und dass der Kommunikationsknoten eine Umsetzeinheit aufweist, die zur Umsetzung der Steuerdaten zwischen dem proprietären Kommunikationsprotokoll und dem genormten Kommunikationsprotokoll eingerichtet ist.

Dadurch können alle Kommunikationsendgeräte, die an den Kommunikationsknoten angemeldet sind, die Schnittstellenstruktur des Kommunikationsknotens gemeinsam verwenden, so dass diese Schnittstellenstruktur nur noch einmal in dem Kommunikationsnetzwerk, nämlich in dem Kommunikationsknoten, realisiert ist. Dadurch lassen sich die Kommunikationsendgeräte einfacher herstellen, und mögliche Lizenzierungskosten für Schnittstellenstrukturen werden verringert.

Das Kommunikationsendgerät kann durch weitere Komponenten und Einrichtungen vorteilhaft weitergebildet sein, die der Realisierung eines erfindungsgemäßen Verfahrens dienen.

Das Verfahren ist durch die kennzeichnenden Merkmale der abhängigen Patentansprüche 2 bis 6 vorteilhaft ausgestaltet. Die für das Verfahren beschriebenen Vorteile gelten dabei sinngemäß auch für die Kommunikationsanordnung.

Wenn das erste Kommunikationsprotokoll zusätzlich zur Übertragung von Steuerbefehlen und Zustandsinformationen zwischen dem ersten Kommunikationsendgerät und dem Kommunikationsknoten verwendet wird, reduziert sich die Anzahl der notwendigen Schnittstellenstrukturen in dem Kommunikationsendgerät.

Der Funktionsumfang für die zur Signalisierung und zur Steuerung der Kommunikationsverbindung eingesetzten Schnittstellenstruktur lässt sich einfacher auf die Erfordernisse einstellen, wenn das erste Kommunikationsprotokoll ein proprietäres Kommunikationsprotokoll ist.

Wenn als das Nutzdatenprotokoll das RTP/RTCP-Protokoll und als das zweite Kommunikationsprotokoll das H.323-Protokoll oder das H.450-Protokoll oder das SIP-Protokoll verwendet wird, stehen für Kommunikationsverbindungen bewährte und weitverbreitete und international genormte Kommunikationsprotokolle zur Verfügung. Damit werden insbesondere Kommunikationsverbindungen zu Teilnehmern, die zu Kommunikationsnetzwerken anderer Hersteller gehören, auf einfache Weise möglich.

Wenn in dem Kommunikationsknoten eine Schnittstellenstruktur zum Austausch von Steuerdaten gemäß dem zweiten Kommunikationsprotokoll verwendet wird, kann diese Schnittstellenstruktur sowohl von dem Kommunikationsknoten, als auch von dem ersten Kommunikationsendgerät verwendet werden. Bei einer Kommunikationsverbindung zwischen dem ersten und dem zweiten Kommunikationsendgerät nimmt dabei der Kommunikationsknoten die Protokollumsetzung ("Interworking") vor, so dass in dem ersten Kommunikationsendgerät eine Schnittstellenstruktur zum Austausch von Steuerdaten gemäß dem zweiten Kommunikationsprotokoll nicht benötigt wird.

Die Anzahl der in dem Kommunikationsnetzwerk zu verwendenden Schnittstellenstrukturen, die zum Austausch von Steuerdaten gemäß dem zweiten Kommunikationsprotokoll eingerichtet sind, wird verringert, indem in dem paketvermittelten Kommunikationsnetzwerk weitere Kommunikationsendgeräte nach Art des ersten Kommunikationsendgerätes verwendet werden, und indem das erste und die weiteren Kommunikationsendgeräte zum Austausch von Steuerdaten mit dem zweiten Kommunikationsendgerät gemeinsam die Schnittstellenstruktur des Kommunikationsknotens verwenden. In den Fällen, in denen der Einsatz jeder derartigen Schnittstellenstruktur (Protokoll-Stack) mit dem Erwerb einer entsprechenden Lizenz einhergeht, kann durch die gemeinsame Nutzung einer einzigen Schnittstellenstruktur, die in dem Kommunikationsknoten angeordnet ist, der Aufwand für die zu erwerbenden Lizenzen verringert werden.

Ausführungsbeispiele zur Erläuterung des erfindungsgemäßen Verfahrens sind nachfolgend anhand der Zeichnung erläutert und dienen gleichzeitig der Erläuterung eines Ausführungsbeispiels der erfindungsgemäßen Kommunikationsanordnung.

Dabei zeigen
- Figur 1: eine Kommunikationsanordnung mit einem zweiten Kommunikationsknoten, einem H.323-Gatekeeper und zwei Kommunikationsendgeräten, die über ein paketvermitteltes Kommunikationsnetzwerk miteinander verbunden sind,
- Figur 2: eine Kommunikationsanordnung mit einem Kommunikationsknoten, mit dem über ein paketvermitteltes Netzwerk drei Kommunikationsendgeräte verbunden sind, und
- Figur 3: zur Erläuterung des Standes der Technik eine Kommunikationsanordnung mit einem Kommunikationsknoten und einem ersten und einem zweiten Kommunikationsendgerät, die über ein paketvermitteltes Netzwerk miteinander verbunden sind.

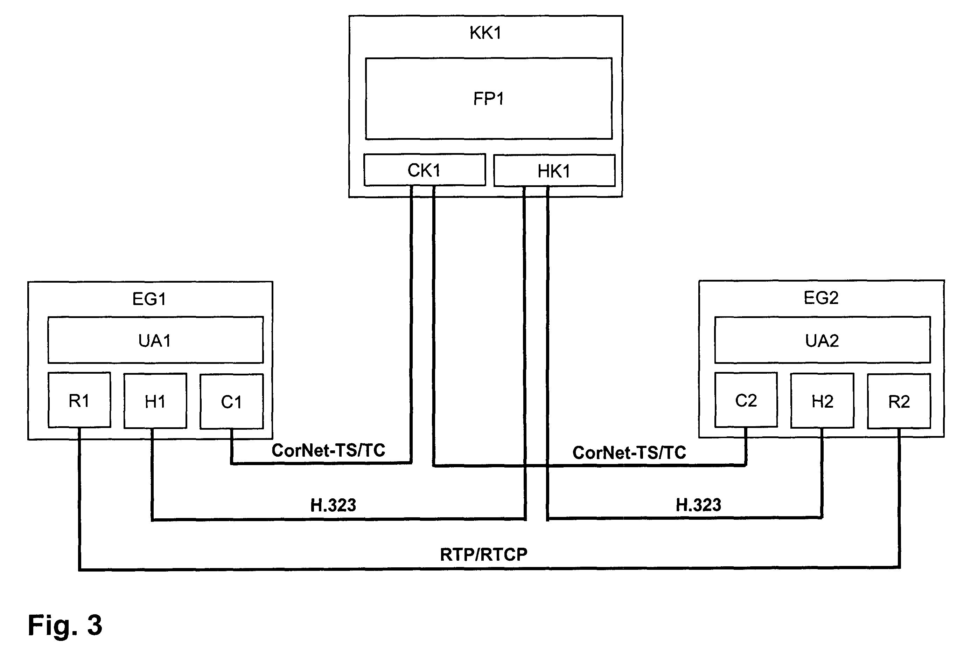

Die Figur 3 zeigt eine Kommunikationsanordnung, wie sie aus dem Stand der Technik bekannt ist. Darin sind die Kommunikationsendgeräte EG1, EG2 und der Kommunikationsknoten KK1 über ein paketvermitteltes Kommunikationsnetzwerk miteinander verbunden. Die Kommunikationsendgeräte EG1, EG2 weisen die Nutzdatenschnittstellen R1, R2 auf, mit denen Nutzdaten gemäß des RTP/RTCP-Protokolls ausgetauscht werden können. In der Figur 3 ist ein möglicher Nutzdatenkanal als Verbindungslinie zwischen den Nutzdatenschnittstellen R1 und R2 gekennzeichnet, wobei die Nutzdatenverbindung mit dem Namen des hier verwendeten Kommunikationsprotokolls "RTP/RTCP" gekennzeichnet ist.

Die Kommunikationsendgeräte EG1, EG2 und der Kommunikationsknoten KK1 sind mit weiteren Schnittstellenstrukturen H1, C1, H2, C2, CK1, HK1 zum Austausch von Steuerdaten ausgerüstet. Auch für diese Schnittstellenstrukturen sind die möglichen Verbindungen (Kanäle) in dem paketvermittelten Kommunikationsnetzwerk in Form von Linien visualisiert, wobei auch diese Verbindungslinien mit dem Namen der verwendeten Kommunikationsprotokolle ("Steuerungsprotokolle") H.323, CorNet-TS/TC beschriftet sind.

Bei den Schnittstellenstrukturen H1, H2, HK1 handelt es sich um Schnittstellenstrukturen (Protokoll-Stacks) zum Austausch von Steuerdaten gemäß des H.323-Protokolls. Die Schnittstellenstrukturen C1, C2, CK1 hingegen dienen dem Austausch von Steuerdaten gemäß dem proprietären Kommunikationsprotokoll CorNet-TS/TC.

Bei den Kommunikationsendgeräten EG1, EG2 handelt es sich um Sprachdaten-Endgeräte, die als Telefone zum Betrieb in einem Datennetzwerk bzw. Sprachdatennetzwerk gemäß dem Internet-Protokoll ausgebildet sind. Selbstverständlich können die Endgeräte aber auch in einer anderen Bauform, beispielsweise als Multimedia-PCs, ausgeführt sein. Während die Kommunikationsendgeräte EG1, EG2 bei einer Kommunikationsverbindung zwischen diesen beiden Kommunikationsendgeräten EG1, EG2 die Nutzdaten direkt miteinander austauschen, und zwar unter Nutzung des RTP/RTCP-Protokolls, werden die Steuerdaten unter Zuhilfenahme des Kommunikationsknotens KK1 ausgetauscht, der in der dargestellten Kommunikationsanordnung die Funktion eines Gatekeepers ausübt. Die für die Verbindungssteuerung auszutauschenden Steuerdaten werden gemäß dem H.323-Protokoll ausgetauscht, wobei die dargestellten Kommunikationsendgeräte EG1, EG2 in Verbindung mit den Kommunikationsknoten KK1 weitere Funktionen aufweisen, die mit dem Kommunikationsprotokoll H.323 nicht abbildbar sind. Dazu gehören beispielsweise Displaymeldungen, die gesteuert durch den Kommunikationsknoten KK1 auf (nicht dargestellten) Anzeigeelementen der Kommunikationsendgeräte EG1, EG2 angezeigt werden sollen. Umgekehrt können beispielsweise Steuerungsmeldungen der Kommunikationsendgeräte EG1, EG2 über Tasten, die ein Benutzer an diesen Kommunikationsendgeräten EG1, EG2 drückt, nicht mittels des H.323-Protokolls zu dem Kommunikationsknoten KK1 übermittelt werden. Aus diesem Grunde sind die Kommunikationsendgeräte EG1, EG2 mit den Schnittstellenstrukturen C1, C2 ausgerüstet, mit deren Hilfe die benannten und weitere Steuermeldungen mit der entsprechenden Schnittstellenstruktur CK1 des Kommunikationsknotens KK1 unter Verwendung eines proprietären Kommunikationsprotokolls CorNet-TS/TC ausgetauscht werden.

Die Kommunikationsendgeräte EG1, EG2 erlangen ihre jeweilige Funktionalität dadurch, dass sie jeweils einen Funktionsblock UA1, UA2 (UA = "User Agent") enthalten, der in den Kommunikationsendgeräten EG1, EG2 auch jeweils die Benutzerschnittstelle (Mikrophon, Lautsprecher, Tastatur, Anzeigeelemente, Tasten etc.) bildet. Die Funktionsmodule UA1, UA2 haben jeweils Zugriff auf die Schnittstellenstrukturen H1, C1, H2, C2 und auf die Nutzdatenschnittstellen R1, R2. Analog dazu ist der Kommunikationsknoten KK1 mit einem Funktionsmodul FP1 (FP = "Feature Processing") ausgerüstet, womit der Kommunikationsknoten KK1 die Funktionalität als vermittelnde Instanz (Gatekeeper) erst erhält. Der Funktionsblock FP1 greift zur Kommunikation mit den Kommunikationsendgeräten EG1, EG2 auf die Schnittstellenstrukturen CK1 und HK1 zu, wobei solche Steuerdaten, die der reinen Verbindungssteuerung der RTP/RTCP-Nutzdatenverbindung dienen, über die Schnittstellenstruktur HK1 unter Nutzung des Kommunikationsprotokolls H.323 ausgetauscht werden, während die über diese Basis-Funktionalität hinausgehenden Steuerdaten über die Schnittstellenstruktur CK1 unter Verwendung des proprietären Kommunikationsprotokolls CorNet-TS/TC ausgetauscht werden.

In der dargestellten Kommunikationsanordnung können weitere Kommunikationsendgeräte betrieben werden, die über keine proprietäre Schnittstellenstruktur verfügen, sondern - mit einer eingeschränkten Funktionalität - nur Steuerdaten gemäß dem H.323-Protokoll austauschen. Diese Kommunikationsendgeräte sind dann ebenfalls in der Lage, Nutzdatenverbindungen gemäß des RTP/RTCP-Protokoll mit anderen Kommunikationsendgeräten (z.B. EG1, EG2) zu betreiben; sie sind aber zum Austausch von Steuerdaten lediglich über einen Steuerdatenkanal gemäß dem H.323-Protokoll mit dem Kommunikationsknoten KK1 verbunden.

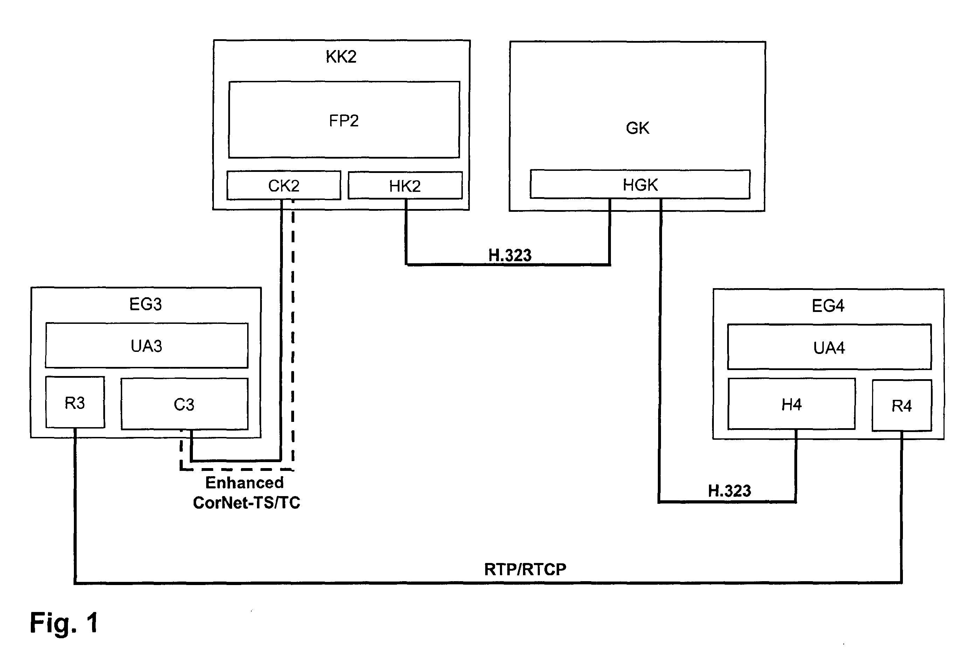

Die Figur 1 zeigt eine erfindungsgemäße Kommunikationsanordnung, in der ebenfalls zwei Kommunikationsendgeräte EG3, EG4 mit einem Kommunikationsknoten KK2 verbunden sind. Weiterer Bestandteil der hier gezeigten Kommunikationsanordnung ist ein Gatekeeper GK, der zum Austausch von Steuerdaten gemäß des H.323-Protokolls ausgestattet ist und dazu eine Schnittstellenstruktur HGK aufweist.

Analog zu dem Kommunikationsendgerät EG1 aus der Figur 3 sind die Kommunikationsendgeräte EG3, EG4 ebenfalls mit Funktionsmodulen UA3, UA4 ausgestattet, die diese Kommunikationsendgeräte EG3, EG4 mit ihrer Funktionalität versehen und die Benutzeroberfläche bilden. Analog zu dem Kommunikationsknoten KK1 aus der Figur 3 ist der Kommunikationsknoten KK2 ebenfalls mit einem Funktionsmodul FP2 ausgestattet, welches in der dargestellten Kommunikationsanordnung eine Vermittlungsfunktionalität sowie zusätzliche Leistungsmerkmale, die von dem Kommunikationsendgerät EG3 zugegriffen werden können, zur Verfügung stellt. Das Funktionsmodul FP umfasst weiter eine Umsetzeinheit zur Umsetzung von Steuerdaten zwischen dem (erweiterten) proprietären Kommunikationsprotokoll Enhanced Cor-Net-TS/TC und dem genormten Kommunikationsprotokoll H.323. Dabei kann für die gezeigte Anordnung anstelle des genormten Kommunikationsprotokolls H.323 auch ein anderes genormtes Protokoll eingesetzt werden (beispielsweise das IETF-SIP-Protokoll), und auch für das erweiterte proprietäre Kommunikationsprotokoll Enhanced CorNet-TS/TC können andere Kommunikationsprotokolle eingesetzt werden, die zur Steuerung der Nutzdatenverbindung und zur Realisierung zusätzlicher Leistungsmerkmale ausgebildet ist. Schließlich sind auch für die gezeigt Nutzdatenverbindung andere (vorzugsweise genormte) Kommunikationsprotokolle als das hier verwendete RTP/RTCP-Protokoll verwendbar.

Die Kommunikationsendgeräte EG3, EG4 sind in analoger Weise zu den Kommunikationsendgeräten EG1 und EG2 aus der Figur 3 mit Nutzdatenschnittstellen R3, R4 ausgestattet, welche dem direkten Austausch von Nutzdaten (Sprachdaten) zwischen den Endgeräten EG3, EG4 und weiteren nicht dargestellten Kommunikationsendgeräten der Kommunikationsanordnung dienen.

Im Unterschied zu den Kommunikationsendgeräten EG1, EG2 aus der Figur 3 ist das Kommunikationsendgerät EG3 in der Figur 1 bezüglich der Steuerdaten lediglich mit einer Schnittstellenstruktur C3 mit dem Kommunikationsknoten KK2 ausgerüstet, wobei die korrespondierende Schnittstellenstruktur CK2 des Kommunikationsknotens KK2 ebenso wie die Schnittstellenstruktur C3 zur Verwendung eines erweiterten proprietären Kommunikationsprotokolls Enhanced CorNet-TS/TC ausgestattet ist. Dieses erweiterte proprietäre Kommunikationsprotokoll Enhanced Cor-Net-TS/TC bietet sowohl Protokollelemente, die geeignet sind, um eine Nutzdatenverbindung gemäß des RTP/RTCP-Protokolls zu steuern, als auch solche, die aus der Figur 3 aus dem proprietären Kommunikationsprotokoll CorNet-TS/TC bekannt sind. Letztgenannte Protokollelemente gestatten die Realisierung von Leistungsmerkmalen und Funktionalität für das Kommunikationsendgerät EG3 in Zusammenhang mit den Kommunikationsknoten KK2, die über die reine Steuerung einer Nutzdatenverbindung hinausgeht, wie sie aus dem H.323-Protokoll bekannt ist.

Im Gegensatz zu den Kommunikationsendgeräten EG1, EG2 umfasst das Kommunikationsendgerät EG3 keinen H.323-konformen Protokoll-Stack, obwohl das Kommunikationsendgerät EG3 in der gleichen Weise wie die Kommunikationsendgeräte EG1, EG2 Nutzdatenverbindungen gemäß des RTP/RTCP-Protokolls austauschen kann. Der H.323-konforme Protokoll-Stack wird also eingespart. In der in Figur 1 gezeigten erfindungsgemäßen Kommunikationsanordnung können jedoch auch Kommunikationsendgeräte wie das gezeigte Kommunikationsendgerät EG4 angeordnet sein, die keine Steuerdaten gemäß eines proprietären Kommunikationsprotokolls austauschen, sondern allein dem verbreiteten Kommunikationsstandard H.323 entsprechen. Ein solches Kommunikationsendgerät EG4 tauscht Steuerdaten mit einem H.323-konformen Gatekeeper aus, wobei in der Figur 1 ein solcher Gatekeeper GK abgebildet ist. Zum Austausch von Steuerdaten umfasst dieser Gatekeeper GK eine Schnittstellenstruktur HGK, die dem H.323-Standard entspricht. Während also das Kommunikationsendgerät EG4 über ein Funktionsmodul UA4 zur Realisierung seiner (Telephonie-) Funktionalität eine Nutzdatenschnittstelle R4 zum Austausch von Sprachdaten gemäß des RTP/RTCP-Protokolls und die bereits erwähnte Schnittstellenstruktur H4 zum Austausch von Steuerdaten mit dem Gatekeeper GK aufweist, weist der Gatekeeper GK selbst nur eine einzige Schnittstellenstruktur HGK auf, mit der er Steuerdaten mit dem Kommunikationsendgerät EG4, dem Kommunikationsknoten KK2 und weiteren hier nicht dargestellten Kommunikationsendgeräten und Kommunikationsknoten bzw. Gatekeepern austauscht.

Im Folgenden wird anhand der Figur 1 die Steuerung einer Kommunikationsverbindung zwischen den Kommunikationsendgeräten EG3, EG4 beschrieben.

Zum Aufbau der Kommunikationsverbindung gibt ein Benutzer des Kommunikationsendgerätes EG4 die Rufnummer des Kommunikationsendgerätes EG3 ein. Das Funktionsmodul UA4 des Kommunikationsendgerätes EG4 sendet nun über die Schnittstellenstruktur H4 eine H.323-konforme Steuerungsmeldung an die Schnittstellenstruktur HGK des Gatekeepers GK. Die Steuerungssoftware des Gatekeepers GK stellt fest, dass das gewünschte Kommunikationsendgerät EG3 nicht an diesem Gatekeeper GK angemeldet ist, und leitet die Steuerungsmeldung zum Aufbau der Kommunikationsverbindung an die Schnittstellenstruktur HK2 des Kommunikationsknotens KK2 weiter. Das Funktionsmodul FP2 des Kommunikationsknotens KK2 setzt die Steuerungsmeldung in das proprietäre Kommunikationsprotokoll Enhanced CorNet-TS/TC um und versendet diese zu der Schnittstellenstruktur C3 des Kommunikationsendgerätes EG3. Dabei werden mit dem proprietären Kommunikationsprotokoll Enhanced CorNet-TS/TC zum einen die H.323-konformen Steuerdaten umgesetzt und weitergeleitet und zum anderen zusätzliche Informationen generiert und ebenfalls zum Kommunikationsendgerät EG3 übertragen.

Die zusätzlichen Informationen sorgen dafür, dass an dem Kommunikationsendgerät EG3 eine Display-Meldung über den von dem Kommunikationsendgerät EG4 eingehenden Ruf ausgegeben wird. In einer Datenbank des Funktionsmoduls FP2 des Kommunikationsknotens KK2 ist zu der Rufnummer des rufenden Kommunikationsendgerätes EG4 ein Name gespeichert, der bei dem Ruf auf dem Display des Kommunikationsendgerätes EG3 erscheint.

Der Benutzer des Kommunikationsendgerätes EG3 drückt nun zur Rufannahme eine entsprechende Taste an dem Kommunikationsendgerät EG3. Dieser Tastendruck wird in eine entsprechende Steuermeldung des proprietären Kommunikationsprotokolls Enhanced CorNet-TS/TC umgesetzt und von der Schnittstellenstruktur C3 zu der Schnittstellenstruktur CK2 übermittelt. Von dem Funktionsmodul FP2 des Kommunikationsknotens KK2 wird der Tastendruck an dem Kommunikationsendgerät EG3 somit registriert und in eine H.323-konforme Steuermeldung zur Rufannahme umgesetzt. Diese Steuermeldung wird über die Schnittstellenstrukturen HK2, HGK und H4 an das Funktionsmodul UA4 übermittelt. In Folge des nun angenommenen Rufes werden von den Kommunikationsendgeräten EG3 und EG4 die Nutzdatenschnittstellen R3 und R4 aktiviert und eine RTP/RTCP-Nutzdatenverbindung direkt zwischen den Kommunikationsendgeräten EG3 und EG4 etabliert. Damit ist die Kommunikationsverbindung aufgebaut. Zum Abbau der Kommunikationsverbindung wurden diesbezügliche Steuerdaten auf dem gleichen Wege wie beim Aufbau der Kommunikationsverbindung ausgetauscht.

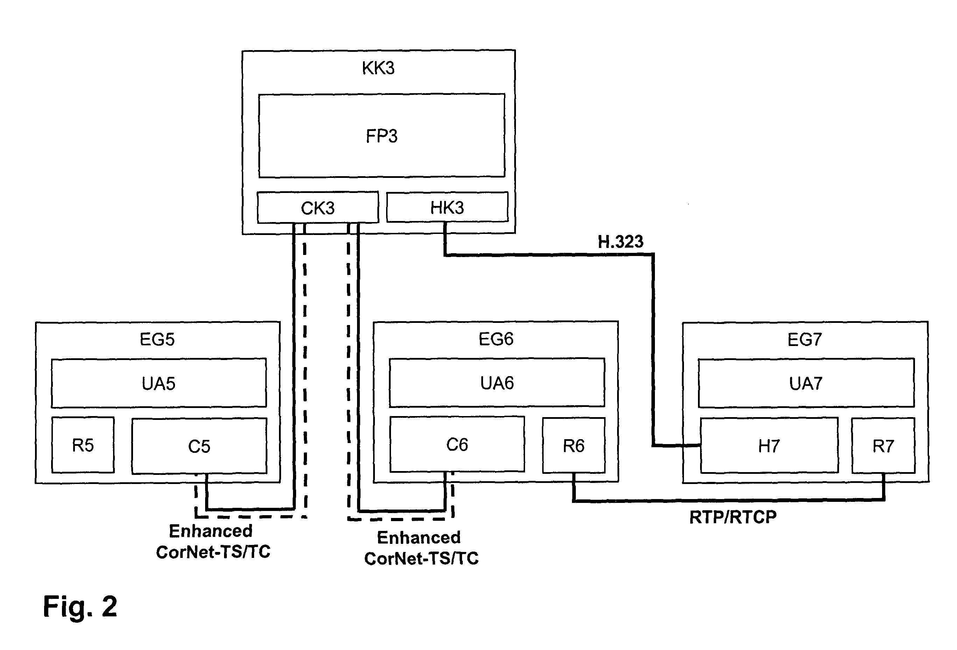

In der Figur 2 ist eine Kommunikationsanordnung gezeigt, in der die Kommunikationsendgeräte EG5, EG6, EG7 mit dem Kommunikationsknoten KK3 über ein (nicht dargestelltes) paketvermitteltes Kommunikationsnetzwerk verbunden sind. Der Kommunikationsknoten KK3 entspricht in seinem technischen Aufbau dem aus der Figur 1 bekannten Kommunikationsknoten KK2, die Kommunikationsendgeräte EG5, EG6 entsprechen technisch dem Kommunikationsendgerät EG3, und schließlich entspricht das Kommunikationsendgerät EG7 dem aus der Figur 1 bekannten H.323-konformen Kommunikationsendgerät EG4. Für Kommunikationsverbindungen zwischen den Kommunikationsendgeräten EG5 und EG6 werden die Steuerdaten, die die (hier nicht dargestellte) Nutzdatenverbindung zwischen den Nutzdatenschnittstellen R5 und R6 betreffen, über den Kommunikationsknoten KK3 ausgetauscht. Im Unterschied zu der in der Figur 1 gezeigten Kommunikationsverbindung werden diese Steuerdaten jedoch nicht in dem Kommunikationsknoten KK3 bzw. in dem Funktionsmodul FP3 in das H.323-Protokoll umgesetzt, weil die Kommunikationsendgeräte EG5 und EG6 das gleiche Kommunikationsprotokoll zum Austausch der Steuerdaten verwenden. Das ist anders, wenn (wie in der Figur 2 dargestellt) eine Kommunikationsverbindung zwischen den Kommunikationsendgeräten EG6 und EG7 betrieben werden soll. Im Unterschied zu der Kommunikationsanordnung aus der Figur 1 ist das Kommunikationsendgerät EG7 nicht an einem eigenständigen H.323-Gatekeeper angemeldet, sondern es tauscht Steuerdaten direkt mit dem Kommunikationsknoten KK3 über dessen Schnittstellenstruktur HK3 aus. Der Kommunikationsknoten KK3 erfüllt somit die Gatekeeper-Funktionalität für das Kommunikationsendgerät EG7. Analog zu dem Ausführungsbeispiel aus der Figur 1 findet im Kommunikationsknoten KK3 für Kommunikationsverbindungen, die zwischen dem Kommunikationsendgerät EG7 und einem der Kommunikationsendgeräte EG5 oder EG6 aufgebaut bzw. betrieben werden sollen, eine Umsetzung von Steuerdaten zwischen dem H.323-Protokoll und dem proprietären Kommunikationsprotokoll Enhanced CorNet-TS/TC statt.

In der dargestellten Kommunikationsanordnung werden Schnittstellenstrukturen zum Austausch von Steuerdaten gemäß des H.323-Protokolls nur an zwei Stellen verwendet, nämlich zum einen in dem H.323-konformen Kommunikationsendgerät EG7 und zum anderen in dem Kommunikationsknoten KK3. Für Kommunikationsverbindungen zwischen den Kommunikationsendgeräten EG5 und EG6 in Verbindung mit dem Kommunikationsknoten KK3 werden keine H.323-Protokoll-Stacks verwendet, obwohl die Nutzdatenverbindungen zwischen dem Kommunikationsendgerät EG5 und EG6 gemäß dem RTP/RTCP-Protokoll betrieben werden. Für Verbindungen der Kommunikationsendgeräte EG5, EG6 mit H.323-konformen Kommunikationsendgeräten genügt die "gemeinsame" Verwendung der H.323-Protokollstacks der Schnittstellenstruktur HK3.

## Patentansprüche

1. Verfahren zur Steuerung einer Kommunikationsverbindung zwischen einem ersten und einem zweiten Kommunikationsendgerät (EG3 und EG4) in einem paketvermittelnden Kommunikationsnetzwerk,
wobei zumindest das erste Kommunikationsendgerät (EG3) an einem Kommunikationsknoten (KK2) angemeldet ist,
wobei zur Steuerung der Kommunikationsverbindung Steuerdaten zwischen dem ersten und dem zweiten Kommunikationsendgerät (EG3 und EG4) unter Zwischenschaltung des Kommunikationsknotens (KK2) ausgetauscht werden, und
wobei Nutzdaten direkt zwischen dem ersten und dem zweiten Kommunikationsendgerät (EG3 und EG4) unter Verwendung eines Nutzdatenprotokolls ausgetauscht werden,
**dadurch gekennzeichnet,**
**dass** das erste Kommunikationsendgerät (EG3) zum Austausch der Steuerdaten ein erstes Kommunikationsprotokoll und das zweite Kommunikationsendgerät (EG4) zum Austausch der Steuerdaten ein zweites Kommunikationsprotokoll verwendet, und
**dass** in dem Kommunikationsknoten (KK2) die Steuerdaten von dem ersten in das zweite Kommunikationsprotokoll umgesetzt werden, und umgekehrt.

2. Verfahren nach Patentanspruch 1,
**dadurch gekennzeichnet,**
**dass** das erste Kommunikationsprotokoll zusätzlich zur Übertragung von Steuerbefehlen und Zustandsinformationen zwischen dem ersten Kommunikationsendgerät (EG3) und dem Kommunikationsknoten (KK2) verwendet wird.

3. Verfahren nach einem der vorhergehenden Patentansprüche,
**dadurch gekennzeichnet,**
**dass** das erste Kommunikationsprotokoll ein proprietäres Kommunikationsprotokoll ist.

4. Verfahren nach einem der vorhergehenden Patentansprüche,
**dadurch gekennzeichnet,**
**dass** als das Nutzdatenprotokoll das RTP/RTCP-Protokoll und als das zweite Kommunikationsprotokoll das H.323 Protokoll oder das H.450-Protokoll oder das SIP-Protokoll verwendet wird.

5. Verfahren nach einem der vorhergehenden Patentansprüche,
**dadurch gekennzeichnet,**
**dass** in dem Kommunikationsknoten (KK2) eine Schnittstellenstruktur (HK2) zum Austausch von Steuerdaten gemäß dem zweiten Kommunikationsprotokoll verwendet wird.

6. Verfahren nach Patentanspruch 5,
**dadurch gekennzeichnet,**
**dass** in dem paketvermittelnden Kommunikationsnetzwerk weitere Kommunikationsendgeräte nach Art des ersten Kommunikationsendgerätes (EG3) verwendet werden, und
**dass** das erste und die weiteren Kommunikationsendgeräte zum Austausch von Steuerdaten mit dem zweiten Kommunikationsendgerät (EG4) gemeinsam die Schnittstellenstruktur (HK2) des Kommunikationsknotens (KK2) verwenden.

7. Kommunikationsanordnung mit einem Kommunikationsendgerät (EG3) und einem Kommunikationsknoten (KK2) in einem paketvermittelnden Kommunikationsnetzwerk, wobei
- das Kommunikationsendgerät (EG3) an dem Kommunikationsknoten (KK2) angemeldet ist,
- der Kommunikationsknoten (KK) mit einer Schnittstellenstruktur (HK2) zur Steuerung einer Nutzdatenverbindung gemäß eines genormten Kommunikationsprotokolls ausgerüstet ist, und
- das Kommunikationsendgerät (EG3) eine Nutzdatenschnittstelle (R3) zum Austausch von Nutzdaten in einer Nutzdatenverbindung gemäß eines Nutzdatenprotokolls aufweist,
**dadurch gekennzeichnet, dass**
- das Endgerät (EG3) eine Schnittstellenstruktur (C3) zum Austausch von Steuerdaten gemäß eines proprietären Kommunikationsprotokolls mit dem Kommunikationsknoten (KK2) aufweist, und
- der Kommunikationsknoten (KK2) eine Umsetzeinheit aufweist, die zur Umsetzung der Steuerdaten zwischen dem proprietären Kommunikationsprotokoll und dem genormten Kommunikationsprotokoll eingerichtet ist.

8. Kommunikationsanordnung nach Patentanspruch 7,
**dadurch gekennzeichnet,**
**dass** das Nutzdatenprotokoll das RTP/RTCP-Protokoll und das genormte Kommunikationsprotokoll das H.323 Protokoll oder das H.450-Protokoll oder das SIP-Protokoll ist.
